# EUROPEAN PATENT SPECIFICATION

(11) **EP 0 551 528 B1**
(45) Date of publication and mention of the grant of the patent: **27.01.1999**
(21) Application number: 92916959.7
(22) Date of filing: 05.08.1992
(51) Int. Cl.: G06F 12/00, G06F 9/46

(54) **METHOD AND APPARATUS FOR REDUCING LOCK PERIOD OF SHARED BUFFER**
VERFAHREN UND VORRICHTUNG ZUR REDUZIERUNG DER SPERRZEIT EINES GEMEINSAMEN PUFFERS
PROCEDE ET APPAREIL SERVANT A REDUIRE LA PERIODE DE VERROUILLAGE D'UN TAMPON PARTAGE

(30) Priority: 06.08.1991 JP 196497/91
(43) Date of publication of application: 21.07.1993
(73) Proprietor: FUJITSU LIMITED, Kawasaki-shi, Kanagawa 211 (JP)
(72) Inventor: HAYASHI, Katzumi, Nakahara-ku Kawasaki-shi Kanagawa 211 (JP); MITANI, Masaaki, Nakahara-ku Kawasaki-shi Kanagawa 211 (JP); SHIMOGAI, Yoshinori, Nakahara-ku Kawasaki-shi Kanagawa 211 (JP)
(74) Representative: Rackham, Stephen Neil
(86) International application number: JP9200996
(87) International publication number: WO9303436

(56) References cited:
- JP-A- 1 068 850
- JP-A- 3 003 046
- JP-A- 4 018 646
- JP-A- 4 024 750
- JP-A-62 245 347
- JP-A-62 245 348
- JP-A-63 133 240
- RESEARCH REPORT, RJ 8017 15 March 1991 , IBM, YORKTOWN HEIGHTS, NY, US pages 1 - 31 C. MOHAN 'Recovery and coherency-control protocols for fast intersystem page transfer and fine-granularity locking in a shared disks transaction environment'
- IBM TECHNICAL DISCLOSURE BULLETIN. vol. 33, no. 3B , August 1990 , NEW YORK US pages 287 - 288 XP124354 'Weak locks with two-level locking multi-computer system protocol to reduce lock-holding time'
- C.J. DATE 'An introduction to database systems, Vol. II' July 1985 , ADDISON-WESLEY , READING, MA, US pages 9 - 17, Par. 1.3 Transaction Failures, Par 1.4 System Failures * page 10, line 32 - page 11, line 4 * * page 16, line 15 - line 29 *
- IBM TECHNICAL DISCLOSURE BULLETIN. vol. 29, no. 5 , October 1986 , NEW YORK US pages 2328 - 2331 'Update merging mechanism for shared memory in multi-systems'

## Description

### TECHNICAL FIELD

The present invention relates to a method of and an apparatus for shortening a lock period of a shared buffer, and particularly, to a method of and an apparatus for shortening a lock period of a shared buffer that interposes when application programs ask a data base management system to access a database. Shortening the lock period during which the contents of the buffer shared by transactions are written back to the database shortens a waiting time of the transactions.

### BACKGROUND ART

Many data processing systems working on computers employ a database. The database is a file containing various data shared by users and is controlled by a database management system which is software. Application programs running on the computer create transactions to ask the database management system to refer to or update the database. Each transaction serves as an execution unit to refer to, retrieve data from, or update the database.

When a transaction accesses the database for some data through the database management system, the data may already be in a buffer shared by transactions due to another transaction which previously accessed the same data, or the data must be transferred from the database to the shared buffer. The transaction in question then refers to or updates the contents of the shared buffer through the database management system. In this way, data of the database are stored in a disk as well as in at least one buffer shared by transactions. When some data is continuously used for a long time by transactions, the data will always stay in the shared buffer.

The shared buffer is allocated in a volatile memory that operates at high speed. If a system crash occurs before a result of a transaction acting on the shared buffer is written back to the database on the disk, the contents of the shared buffer will be lost. To avoid such loss, the contents of the shared buffer must be stored as a post-update log in a nonvolatile memory. According to the post-update log and data on the disk, the contents of the shared buffer will be recovered if they are lost. The time required for the recovery is proportional to the volume of the post-update log. The recovery time will be shortened if the volume of the post-update log is made smaller. To reduce the volume of the post-update log, the contents of the shared buffer must be periodically written back to the database on the disk. A period for writing the contents of the shared buffer back to the database on the disk is a lock period of the shared buffer.

During the lock period of the buffer shared by transactions, the transactions are queued.

The present invention relates to a method of and an apparatus for shortening such lock period of a shared buffer to a memory copying period.

### DISCLOSURE OF THE INVENTION

A method of shortening a lock period of a shared buffer in a data processing system involves a step of securing a copy memory used when nonvolatilizing the contents of the shared buffer;
a step of temporarily locking the shared buffer;
a step of copying the contents of the shared buffer into the copy memory;
a step of unlocking the shared buffer after completion of the copying into the copy memory;
a step of copying the log data in the log buffer to the log file to nonvolatize the log data before updating the shared buffer and,
a step of nonvolatilizing the contents of the copy memory,
the shared buffer being locked before the contents thereof are copied into the copy memory and being unlocked after completion of the copying and before the nonvolatilization of the contents of the copy memory.

The method preferably further has a step of determining whether or not the shared buffer to be nonvolatilized will be updated. If the shared buffer will not be updated, the contents of the shared buffer are written back to and nonvolatilized in a database without securing the copy memory and without copying the contents of the shared buffer into the copy memory.

A data processing system according to another aspect of the present invention has a database management system for accessing and managing a database, at least one buffer shared by transactions, a log buffer for temporarily storing pre- and post-update logs, a log file for storing the pre- and post-update logs, and the database for storing data, the data processing system comprises:
a copy memory for temporarily storing the contents of the shared buffer; and
a replacement controller for copying the contents of the shared buffer into the copy memory, a process selector for determining whether or not the shared buffer will be updated, an exclusive controller for exclusively controlling the shared buffer, and a log controller for saving the pre- and post-update logs,
the shared buffer being locked before the contents thereof are copied into the copy memory, and being unlocked after the completion of the copying and before the nonvolatilization of the contents of the copy memory, to shorten a lock period of the shared buffer.

If the shared buffer will not be updated, the process selector writes the contents of the shared buffer to and nonvolatilizes them in the database without securing the copy memory and without copying the contents of the shared buffer into the copy memory.

### BRIEF DESCRIPTION OF THE DRAWINGS

Figure 1 explains the control of shared buffers according to a prior art;
Fig. 2 explains the writing of buffered data to a database according to the prior art;
Fig. 3 explains temporal changes in transactions according to the prior art;
Fig. 4 shows a basic arrangement of the present invention;
Fig. 5 shows a flow of processes according to an embodiment of the present invention;
Fig. 6 shows the writing of buffered data to a database according to the embodiment;
Fig. 7 explains temporal changes in transactions according to the embodiment; and
Fig. 8 compares the effects of the present invention with those of the prior art.

### BEST MODE OF CARRYING OUT THE INVENTION

Before explaining embodiments of the present invention, the prior art and the problems thereof will be explained.

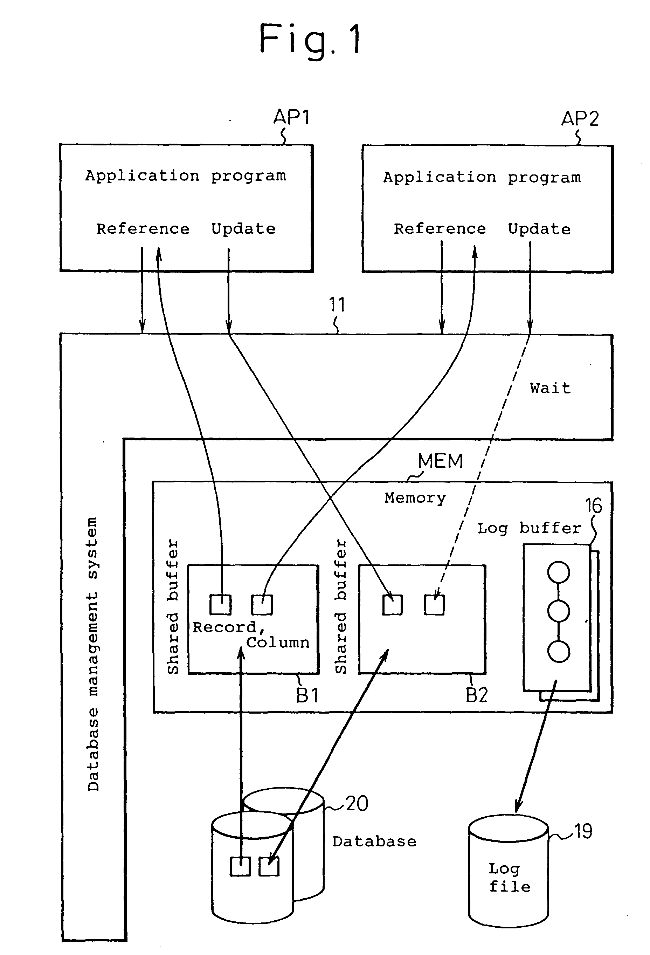

Figure 1 explains the control of shared buffers according to the prior art. Application programs AP1 and AP2 create transactions to refer to and update a database 20. A database management system 11 is software for accessing and managing the database 20. A memory MEM is disposed in a data processing system. Buffers B1 and B2 are shared by the transactions. A log buffer 16 stores pre- and post-update logs. A log file 19 stores the contents of the log buffer 16.

The application program AP1 retrieves data from the database 20 through the database management system 11. The application program AP2 retrieves data from the database 20 through the system 11 and updates the data.

When the application program AP1 provides the database management system 11 with an instruction to retrieve data (a record or a column), the database management system 11 transfers the required data from the shared buffer B1 to the application program AP1 if the buffer B1 holds a page (block) containing the required data. If the buffer B1 does not have the page, the database management system 11 fetches the page from the database 20, puts it in the buffer B1, and transfers the required data from the buffer B1 to the application program AP1.

When the application program AP2 provides the database management system 11 with an instruction to fetch data from the same page as that requested by the application program AP1, the database management system 11 transfers the required data, which has already been transferred from the database 20 to the shared buffer B1, from the buffer B1 to the application program AP2 without repeatedly retrieving the data from the database 20.

A page number is frequently used as a key to lock a corresponding page in a buffer shared by transactions. The locked page allows the transactions to simultaneously refer to data stored therein but prohibits the transactions from simultaneously updating the page. For example, if the application program AP2 provides an instruction to update a page in the shared buffer B2 while the same page is being updated and locked according to a page number provided by the application program AP1, a transaction caused by the updating instruction of the application program AP2 must wait until the page is unlocked.

When the transaction of the application program AP1 reaches a commit point, the database management system 11 unlocks the page. Thereafter, the page in the shared buffer B2 is again locked by the updating transaction of the application program AP2 and is updated. In this way, the buffer shared by the application programs AP1 and AP2 is updated.

The shared buffer may be locked subpage by subpage, or record by record, instead of page by page. In this case, the application programs AP1 and AP2 may simultaneously update the subpages or records in the shared buffer.

The contents (pages) of the shared buffer are written back to the disk (data base 20) at predetermined timing. Then, a log holding data updated by the last read or write operation will not be needed for recovering the contents of the buffer even if they are lost. The log buffer 16 temporarily stores pre- and post-update logs of the shared buffers B1 and B2. The contents of the log buffer 16 are nonvolatilized by saving them in the log file 19 at predetermined timing.

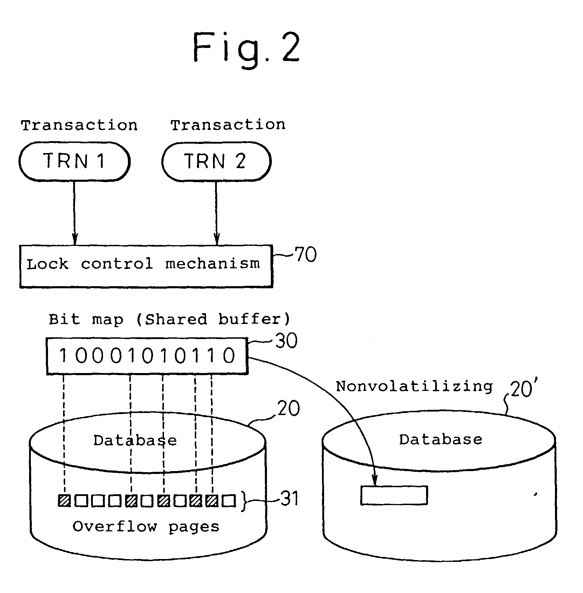

Figure 2 explains a write back operation according to the prior art. There are two transactions TRN1 and TRN2. The database management system 11 has a lock controller 70. A buffer shared by the transactions is a bit map 30. The database 20 includes overflow pages 31. A database 20' is used to nonvolatilize the contents of the shared buffer. The bit map 30 controls the overflow pages 31. For example, any bit of the bit map 30 will be ON when a corresponding one of the overflow pages 31 is in use and OFF when the corresponding page is unused. The bit map 30 is updated by a transaction using or not using the overflow pages 31.

Whenever a bit of the bit map 30 is updated, a log of the bit map is accumulated in a log file or in a nonvolatile memory. If a system crush occurs, the bit map 30 is recovered according to post-update logs. The quantity of the logs must be as small as possible to reduce the cost of a recovering system. To reduce the quantity of the post-update logs used for recovering the shared buffer after the contents thereof are lost, the bit map 30 is saved in the database 20' that may be realized in a disk.

The bit map that manages the overflow pages is frequently accessed by transactions, and therefore, is called a hot spot. Once the bit map is read from the database into the shared buffer, it will be continuously accessed and will never be written back to the disk (database 20') unless it is forcibly saved in the database 20'. To reduce the quantity of the post-update logs necessary for recovering the bit map and to reduce the cost of the recovering system, the bit map in the shared buffer must be forcibly saved in the database 20'.

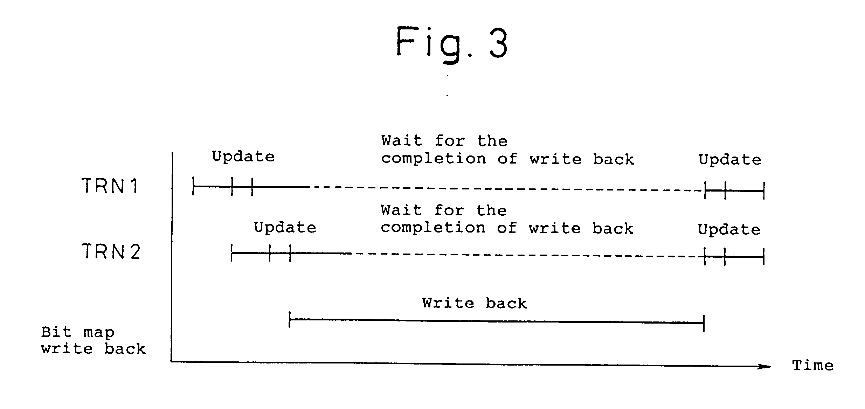

Figure 3 shows temporal changes in the transactions according to the prior art. When the bit map 30 of Fig. 2 is forcibly written back to the database 20', the transactions TRN1 and TRN2 that are going to obtain the overflow pages 31 are queued until the bit map 30 is completely written back to the database 20'. Namely, once the write back operation of the bit map 30 starts, the update demands of the transactions TRN1 and TRN2 are queued until the write back operation ends.

If a transaction updates the hot spot such as the bit map 30 of the shared buffer while the contents of the buffer are being forcibly written back to the database, data in the middle of updating will be saved in the database. To recover the contents of the shared buffer lost due to a system crush, it is necessary to employ a special log system employing a restricted structure and idempotent characteristics. Such log system may substitute old logs for lost logs.

The present invention, however, is based on a standard log system that does not allow a loss of pre-and post-update logs. The present invention, therefore, separately carries out the write back of the contents of a shared buffer and the saving of a log of the buffer. Namely, the present invention saves all logs of a shared buffer before starting a write back operation and stops transactions that update the shared buffer, during the write back operation.

As explained before, transactions that update a shared buffer must be put in a wait state while the contents of the buffer are being written back to a database. This results in elongating a response time of the transactions. A response time of a transaction is a sum of an original response time of the transaction, a write back time of a shared buffer, and a write time of a pre-update log. Namely, when the contents of a shared buffer that is going to be updated by a transaction are written back to a database, a response time of the transaction is a sum of an original response time of the transaction, a time necessary for writing back the contents of the buffer to the database, and a time necessary for saving a pre-update log of the buffer that has been updated by a presently active transaction, in a log file.

A transaction that is in a wait state due to a locked hot spot in a shared buffer may involve resources other than the shared buffer. Namely, the transaction may involve other pages of a database and memories in addition to the hot spot that is being forcibly written back to the database. This means that, while the transaction is in the wait state, other transactions will be queued behind the transaction in question until the resources related to the transaction in question are released. The queued transactions are unable to use any resource. Even a system having a capacity of MIPS (million instructions per second) grade is unable to use any resource until the first wait state is canceled. This situation resembles a traffic jam and is called a convoy phenomenon. Other conventional techniques for controlling database buffers include a shadow paging method and a multiversion concurrency control method. These methods may resemble the present invention in that they copy the contents of a shared buffer. They, however, essentially differ from the present invention as will be explained below.

The shadow paging method locks a shared buffer page by page, and when a transaction updates a given page, allows no other transactions to share the locked page. Before the updating transaction reaches a commit point, the contents of the page in the middle of updating are written back to an unused page allotted in a disk (a database). The database contains page data and a table showing relationships between page numbers and locations on the disk. When the contents of the page updated are completely written back to the allotted page on the disk, an original page is shifted to the allotted page on the table, and then a commitment is given to the transaction. A rollback is achieved by simply discarding the allotted page. This shadow paging method resembles the present invention in that it allots an area for storing write back data. This method, however, allots the area on the disk, prohibits the sharing of a page that is being updated, and never considers an improvement in write back performance.

The multiversion concurrency control method will be explained. This method does not guarantee a sequence of steps. An updating transaction has an exclusive copy of data to be updated and puts other transactions in a wait state until it reaches a commit point. Transactions are allowed to simultaneously refer to a committed latest copy. Whenever an updating transaction reaches a commit point, a new version will be referred to. No dirty copy exists in the middle of transaction. Order of commitment and reference may be restricted to achieve various levels of integrities. This method resembles the present invention in that it makes a copy of a shared buffer. This method, however, never solves the problems related to the forcible write back operation. The present invention is effective for the multiversion method and a conventional strict exclusive control method.

An object of the present invention is to provide a method of and apparatus for shortening a lock period during which other transactions are queued and in which the contents of a buffer shared by the transactions are written back to a database.

The present invention improves a response time of a transaction that updates a buffer. When it is predicted that there will be no transaction that updates the buffer, the present invention omits the temporary copying of the contents of the buffer, to improve the response time. This results in further improving a system throughput than a standard case that carries out the temporary copying operation.

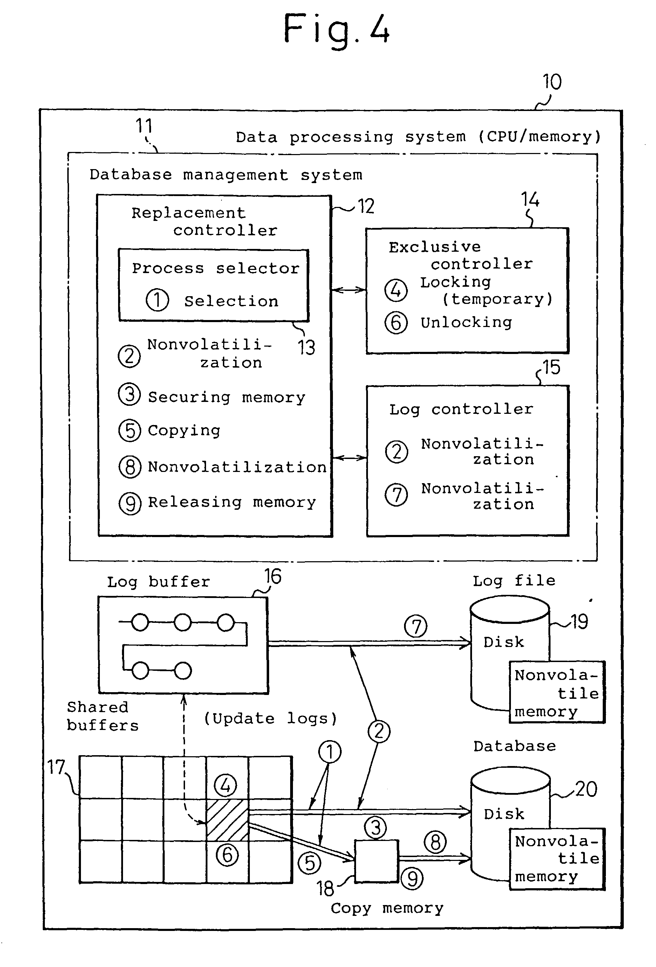

Figure 4 shows a basic arrangement of the present invention. This arrangement includes a data processing system 10 having a CPU and memories. A database management system 11 is software for accessing and managing a database. The database management system 11 has a replacement controller 12 for copying the contents of an object buffer, to shorten a lock period of the buffer, a process selector 13 for determining whether or not the buffer will be updated, an exclusive controller 14 for controlling the buffer, and a log controller 15 for saving pre- and post-update logs. A log buffer 16 stores the pre- and post-update logs. A group of buffers 17 are shared by transactions. A copy memory 18 temporarily stores the contents of one of the shared buffers 17. A log file 19 is realized in a disk or in a nonvolatile memory. The database 20 is realized in a disk or in a nonvolatile memory.

According to the present invention, the buffers 17 are not limited to those mentioned below but may be of any kind. These buffers are shared by a plurality of transactions and store data to be nonvolatilized.

A method of shortening a lock period of any one of the shared buffers according to the present invention is defined in the appended claims.

This method also has a step of predicting whether or not the object buffer to be nonvolatilized will be updated, i.e., whether or not any transaction updates a part in a database corresponding to the object buffer.

If the object buffer will not be updated, the contents of the object buffer are written back to and nonvolatilized in the database without securing the copy memory and without copying the contents of the object buffer into the copy memory.

These steps are managed by the database management system 11. Each of the steps will be explained in detail. When the contents of an object one of the shared buffers 17 are nonvolatilized by writing back them to the database 20, the replacement controller 12 secures the copy memory 18. The copy memory 18 must have the same size as the object buffer 17 depicted as a hatched area in Fig. 4. The replacement controller 12 asks the exclusive controller 14 to lock the object buffer 17. The locking serializes a period in which a transaction completely updates the object buffer and a period in which the contents of the object buffer are nonvolatilized and in which necessary communication is carried out.

This locking is not a transaction lock but is to prevent a simultaneous execution of a buffer control function of an access module for accessing the database and a write back function of the contents of the object buffer to the disk (database). On the other hand, the transaction lock is a transaction granule lock that directly guarantees the ACID characteristics of a transaction. For example, the transaction lock employs a logical page or record number as a key to lock a corresponding page or record in a database. Namely, before referring to or updating the contents of a given page or record of the database, a transaction locks the contents of the page or record according to a logical number of the page or record. The page or record is unlocked after the transaction reaches a commit point.

After the exclusive controller 14 locks the object buffer 17, the contents of the buffer are copied into the copy memory 18. Thereafter, the exclusive controller 14 unlocks the object buffer 17.

Pre- and post-update logs are nonvolatilized if necessary. The contents of the copy memory 18 are written to and nonvolatilized in the database 20. The copy memory 18 is then released.

As explained before, the present invention predicts whether or not the object buffer will be updated, i.e., whether or not any transaction updates a part of the database corresponding to the object buffer. For example, the object buffer will never be updated during a batch retrieval operation or during a wide-range,shared lock. If it is predicted that the object buffer will not be updated, the contents of the object buffer are written back to and nonvolatilized in the database without securing the copy memory and without copying the contents of the buffer into the copy memory.

The prediction process will be explained in detail. In Fig. 4, the replacement controller 12 has the process selector 13. The process selector 13 predicts whether or not an object one of the shared buffers 17 will be updated. This prediction is realized with use of the exclusive control of a transaction lock. Namely, the prediction is carried out by seeing whether or not the object buffer 17 is locked against a transaction under an unshared mode, or by seeing whether or not there is a lock demand of unshared mode.

If it is predicted that the object buffer will be updated, the copy memory 18 is secured, the object buffer is temporarily locked, and the contents of the object buffer are copied into the copy memory. If it is predicted that the object buffer will not be updated, the contents of the object buffer are nonvolatilized without securing the copy memory 18 and without copying the contents of the object buffer into the copy memory.

In Fig. 4, reference numerals (1) to (9) indicate steps carried out in the data processing system. Each of these steps will be explained. Numerals used in the following explanation correspond to the step numbers shown in the figure.
(1) A hatched one of the shared buffers 17 is going to be nonvolatilized. The process selector 13 in the replacement controller 12 predicts whether or not the object buffer 17 will be updated. If it will not be updated, step (2) is executed, and if it will be updated, step (3) is executed. As indicated in the lower part of the figure, the step (1) is optional. Namely, the contents of the object buffer may always be nonvolatilized through the copy memory 18 without the update prediction. Alternatively, the contents of the object buffer may be nonvolatilized according to a result of the update prediction.
(2) The exclusive controller 14 temporarily locks the object buffer 17. The log controller 15 writes a pre-update log to the log file 19 through the log buffer 16. The log buffer 16 is a nonvolatile memory for storing pre- and post-update logs. The contents of the object buffer 17 are written to and nonvolatilized in the database 20. The exclusive controller 14 unlocks the object buffer 17, to complete the process.
(3) If it is determined that the object buffer 17 will be updated, the copy memory 18 is secured. The size of the copy memory 18 must be equal to or larger than that of the object buffer 17 (the hatched area in the figure).
(4) The exclusive controller 14 locks the object buffer 17.
(5) The contents of the object buffer 17 are copied into the copy memory 18.
(6) After the copying, the exclusive controller 14 unlocks the object buffer 17.
(7) The pre-update log in the log buffer 16 is stored in the log file 19 and nonvolatilized.
(8) The contents of the copy memory 18 are written to the database 20 and nonvolatilized.
(9) The secured area of the copy memory 18 is released after the completion of the nonvolatilization.

In this way, the step (4) locks the object buffer 17, and the step (5) copies the contents of the object buffer 17 (the hatched area) into the copy memory 18. Just after the completion of the copying, the step (6) unlocks the object buffer 17. Accordingly, the lock period of the object buffer 17 is very short, thereby improving a response time of a transaction that is going to update the object buffer 17. As explained before, a response time of a transaction is a sum of an original response time of the transaction, a time for writing back the contents of a shared buffer to a database, and a time for writing a pre-update log of the transaction that has updated the buffer in question and is now being executed, to the log file 19. The present invention eliminates the time for writing the contents of the object buffer to the database from the response time.

In the step (1), the process selector 13 predicts whether or not the object buffer 17 will be updated. If the buffer will not be updated, the step (2) nonvolatilizes the contents of the object buffer without using the copy memory 18. This eliminates securing the copy memory that will not be used, thereby improving the throughput of the system compared with a normal case that employs the copy memory.

The nonvolatilization of the pre-update log in the steps (2) and (7) is not necessarily needed. The cases of needing and not needing the nonvolatilization of the pre-update log will be explained. In some case, a post-update log must be nonvolatilized too. The explanation below relates only to operations occurring when saving the contents of an object buffer into the database. The necessity and unnecessariness of the logs in other cases will not be explained. If there is a transaction that is updating an object buffer 17 to be nonvolatilized and if there is a preupdate log, the pre-update log must be nonvolatilized. If a transaction that updated the object buffer 17 has already reached a commit point, or if an overflow page is newly allotted to receive data for the first time and data has been established in the object buffer 17 irrespective of an original page in the disk (the database 20), the pre-update log is not required to be nonvolatilized.

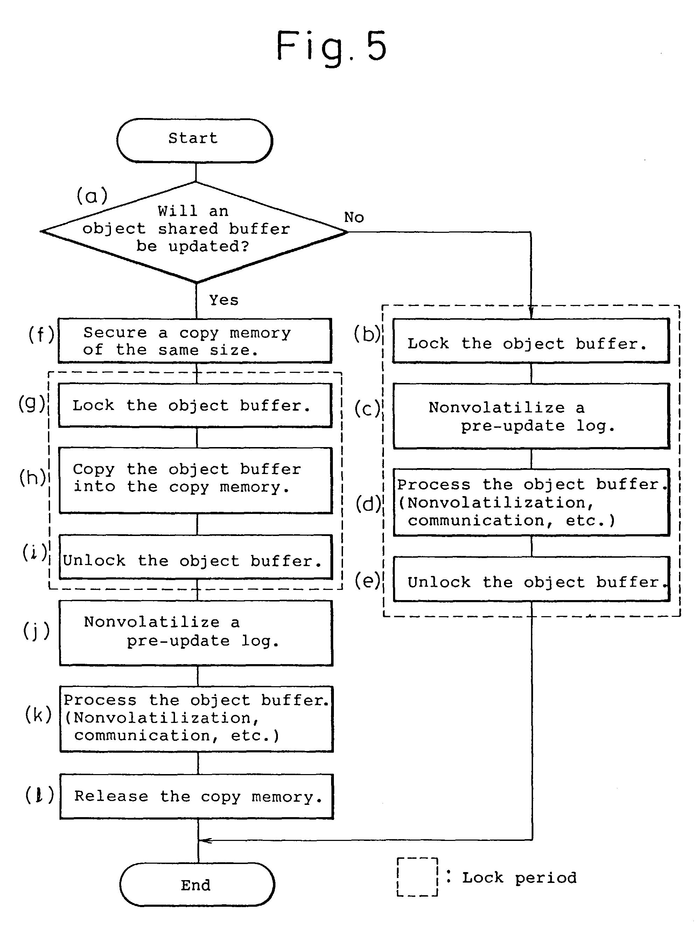

Figure 5 shows a flow of steps according to an embodiment of the present invention. Each of the steps will be explained. An area enclosed with a dotted line corresponds to a lock period.
(a) The process selector 13 predicts whether or not an object one of the shared buffers 17 to be nonvolatilized will be updated. If it will not be updated, step (b) is executed, and if it will be updated, step (f) is executed. The step (a) may be omitted, so that the copy memory 18 is always secured whenever the contents of an object buffer are nonvolatilized without predicting the probability of updating.
(b) The exclusive controller 14 temporarily locks the object buffer 17. This step temporarily serializes a period for actually updating the contents of the object buffer 17 and a period for copying the same into the copy memory before writing back the same to the database.
(c) The log controller 15 stores a pre-update log of the object buffer in the log file 19 through the log buffer 16.
(d) The contents of the object buffer are nonvolatilized, and necessary communication is carried out.
(e) The exclusive controller 14 unlocks the object buffer. This completes the flow.
(f) If it is predicted that the object buffer will be updated, the copy memory 18 is secured. The size of the copy memory 18 must be the same as the size of the object buffer.
(g) The exclusive controller 14 locks the object buffer 17, to temporarily prohibit transactions from accessing the object buffer.
(h) The contents of the object buffer (the hatched area in Fig. 4) are copied into the copy memory 18.
(i) Just after the completion of the copying, the exclusive controller 14 unlocks the object buffer 17.
(j) A pre-update log stored in the buffer 16 is stored in the log file 19 and nonvolatilized.
(k) The contents of the object buffer are nonvolatilized, and necessary communication is carried out.
(l) After the completion of the nonvolatilization of the contents of the copy memory 18, the copy memory 18 is released.

In this way, the step (a) determines whether or not the object buffer will be updated according to the exclusive control data (the locking of the object buffer against transactions). Namely, this determination is done by seeing whether or not the object buffer 17 involving an object page is locked against transactions under an unshared mode, or by seeing whether or not there is a lock demand of unshared mode. If the object buffer is locked or demanded to be locked under a shared mode, it is determined that the object buffer will not be updated. If the object buffer is locked or demanded to be locked under an unshared mode, it is determined that the object buffer will be updated.

For example, if one or a plurality of transactions are locking a given page under a shared mode, it will be predicted that no transaction will wait for updating the page while the page is being locked and directly written back to a database. On the other hand, if a transaction locks a given page under an unshared mode, it will be predicted that there will be some transactions waiting for updating the page while the page is being locked and directly written back the database. In this way, the probability of updating is determined.

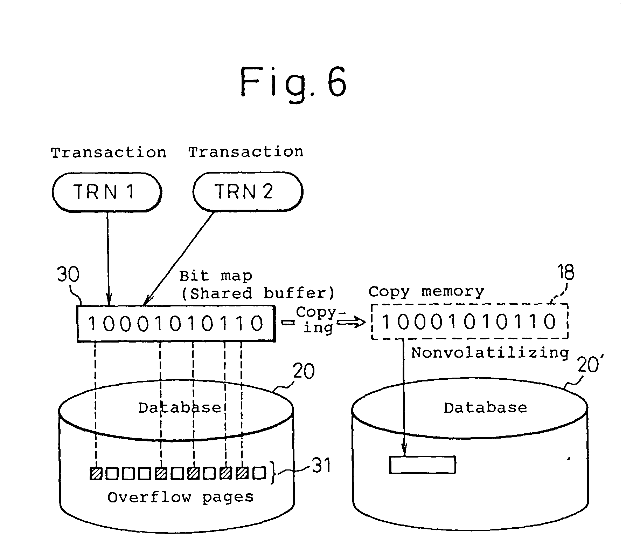

Figure 6 shows data write back to a database, according to an embodiment of the present invention. Similar to Fig. 2, this embodiment includes transactions TRN1 and TRN2, a bit map 30, databases 20 and 20', a copy memory 18, and overflow pages 31. The bit map is realized in a shared buffer and is copied into the copy memory 18.

If a shared buffer is more frequently updated than other shared buffers, the contents thereof will not be written back to the database. Namely, the updated contents of the buffer are always held in a memory without being saved in the database. Such a busy buffer is called a hot spot.

As explained with reference to Fig. 2, the bit map 30 controlling the overflow pages 31 easily becomes a hot spot, because the bit map 30 is accessed page by page and the data density of the bit map 30 is thick. In this case, the contents of the buffer must be forcibly written back to the database, or a large quantity of post-update logs must be prepared for recovery. The present invention minimizes the influence of the locking of the buffer by securing the copy memory 18 in a standard database management system.

After the completion of the copying, the bit map 30 is unlocked, and therefore, the transactions TRN1 and TRN2, which may lock the bit map 30 bit by bit, can use the bit map 30. Namely, the transactions TRN1 and TRN2 are put in a wait state only for the period during which the bit map 30 is copied into the copy memory 18. This technique remarkably shortens the lock period compared with the prior art. In practice, this technique can reduce the lock period to about 1/10000 to 1/100000 of the prior art, thereby drastically improving a response time of a transaction, eliminating the convoy phenomenon, and increasing a throughput.

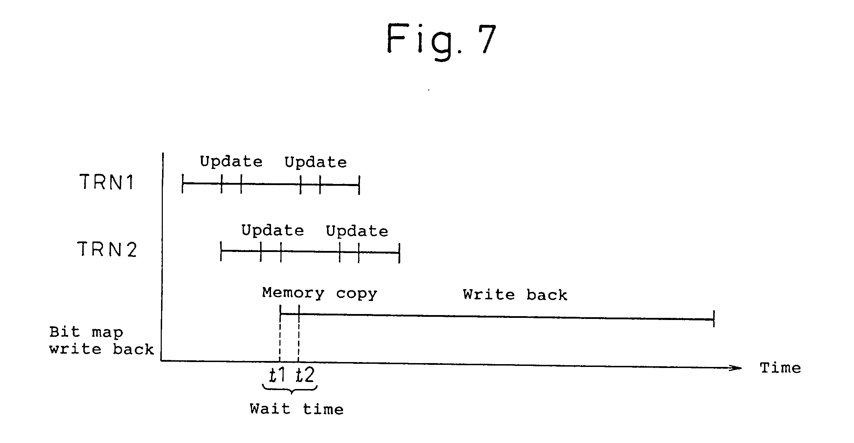

Figure 7 explains temporal changes in transactions according to the embodiment of the present invention. In the figure, an abscissa represents time, and segments represent the transactions. According to the prior art, the transactions TRN1 and TRN2 for updating the bit map 30 are put in a wait state while the bit map 30 is being written back to the database 20'.

According to the embodiment of the present invention, the transactions TRN1 and TRN2 are independent of the write back operation of the bit map 30 to the database 20'. The transactions TRN1 and TRN2 are put in a wait state only for a period between t1 and t2 in which the bit map 30 is copied into the copy memory 18 before being saved in the database 20'.

The period of copying the bit map 30 into the copy memory 18 is very short compared with the period of writing back the bit map 30 to the database 20'. Namely, the lock period between t1 and t2 is very short.

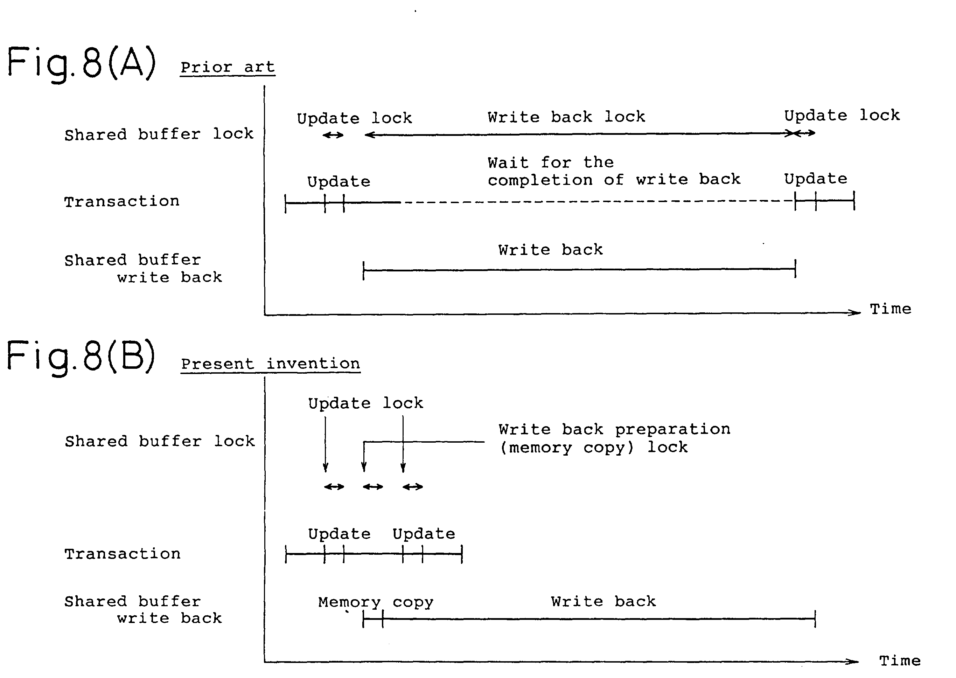

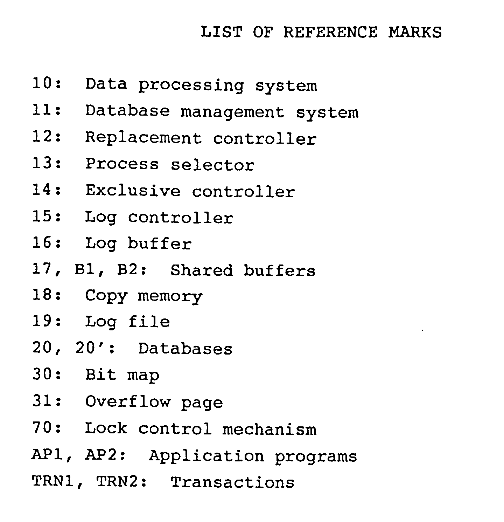

Figures 8(A) and 8(B) compare the present invention with the prior art, in which Fig. 8(A) shows the prior art and Fig. 8(B) shows the present invention. In Fig. 8(A), a shared buffer to be written back is locked for an entire write back period, which must be exclusive with respect to lock periods for updating. Namely, a transaction that updates the shared buffer is put in a wait state during the write back period of the buffer. This results in delaying a response time of the transaction.

In Fig. 8(B), the lock period of the buffer is equal to only a memory copy period, which is a preparation period for the write back operation. During an actual write back operation, the buffer is unlocked, so that transactions that update the buffer are substantially not delayed.

As explained above, the present invention temporarily copies the contents of a buffer to be nonvolatilized into a temporary memory, and nonvolatilizes the copy. This shortens a lock period needed for nonvolatilizing the contents of the buffer and improves a response time of a transaction that updates the buffer. In addition, the present invention substantially eliminates the convoy phenomenon, to improve a throughput.

### CAPABILITY OF EXPLOITATION IN INDUSTRY

The present invention provides a method of and an apparatus for shortening a lock period of a shared buffer that is used when an application program lets a database management system access a database. Since the lock period is shortened, transactions that share the buffer will not be queued for a long time. This results in improving the throughput of a data processing system employing a computer. The present invention, therefore, is applicable for various industrial fields. Present on-line transaction processing systems simultaneously handle more than 1000 processes. In such systems, a queue at a hot spot will immediately cause a convoy phenomenon. This resembles a traffic accident causing a traffic jam in big cities. The present invention greatly reduces a write back period to eliminate the convoy phenomenon, which may correspond to dealing with the traffic accident to clear the traffic jam, thereby improving not only a response time of transactions but also a throughput.

## Claims

1. A method of shortening a lock period of a shared buffer in a data processing system, the steps comprising:
a step (3) of securing a copy memory (18) used when nonvolatilizing the contents of the shared buffer (17);
a step (4) of temporarily locking the shared buffer;
a step (5) of copying the contents of the shared buffer into the copy memory;
a step (6) of unlocking the shared buffer after completion of the copying into the copy memory;
a step (7) of copying the log data in the log buffer (16) to the log file (19) to nonvolatize the log data before updating the shared buffer (17) ; and,
a step (8) of nonvolatilizing the contents of the copy memory,
the shared buffer being locked before the contents thereof are copied into the copy memory and being unlocked after completion of the copying and before the nonvolatilization of the contents of the copy memory.

2. The method according to claim 1, further comprising a step of determining whether or not the shared buffer to be nonvolatized will be updated,
the contents of the shared buffer being written back to and nonvolatilized in a database without securing the copy memory and without copying the contents of the shared buffer into the copy memory, when it is determined that the shared buffer will not be updated.

3. A data processing system having a database management system (11) for accessing and managing a database, at least one buffer (17) shared by transactions, a log buffer (16) for temporarily storing pre- and post-update logs, a log file (19) for storing the pre- and post-update logs, and the database (20) for storing data, the data processing system comprising:
a copy memory (18) for temporarily storing the contents of the shared buffer (17); and
a replacement controller (12) for copying the contents of the shared buffer into the copy memory, a process selector (13) for determining whether or not the shared buffer will be updated, an exclusive controller (14) for exclusively controlling the shared buffer, and a log controller (15) for saving the pre- and post-update logs,
the shared buffer being locked before the contents thereof are copied into the copy memory, and being unlocked after the completion of the copying and before the nonvolatilization of the contents of the copy memory, to shorten a lock period of the shared buffer.

4. The data processing system according to claim 3, wherein the process selector (13), when it determines that the shared buffer will not be updated, writes the contents of the shared buffer to and nonvolatilizes them in the database without securing the copy memory and without copying the contents of the shared buffer into the copy memory.

## Patentansprüche

1. Verfahren zum Verkürzen einer Verriegelungsperiode eines gemeinsam verwendeten Puffers in einem Datenverarbeitungssystem, mit den folgenden Schritten:
einem Schritt (3) zum Sichern eines Kopienspeichers (18), der verwendet wird, wenn die Inhalte des gemeinsam verwendeten Puffers (17) nicht-flüchtig gemacht werden;
einem Schritt (4), um zeitweilig den gemeinsam verwendeten Puffer zu verriegeln;
einem Schritt (5) zum Kopieren der Inhalte des gemeinsam verwendeten Puffers in den Kopienspeicher;
einem Schritt (6) zum Entriegeln des gemeinsam verwendeten Puffers nach der Vervollständigung des Kopiervorganges in den Kopienspeicher;
einem Schritt (7) zum Kopieren der log-Daten in dem log-Puffer (16) in die log-Datei (19), um die log-Daten, bevor der gemeinsam verwendete Puffer (17) auf den neuesten Stand gebracht wird, nicht-flüchtig zu machen; und
einem Schritt (8), um die Inhalte des Kopienspeichers nicht-flüchtig zu machen,
wobei der gemeinsam verwendete Puffer verriegelt wird, bevor die Inhalte desselben in den Kopienspeicher kopiert werden, und entriegelt wird nach der Vervollständigung des Kopiervorganges und bevor die Inhalte des Kopienspeichers nicht-flüchtig gemacht werden.

2. Verfahren nach Anspruch 1, ferner mit einem Schritt, um zu bestimmen, ob der gemeinsam verwendete Puffer, der nicht-flüchtig zu machen ist, auf den neuesten Stand gebracht wird oder nicht,
wobei die Inhalte des gemeinsam verwendeten Puffers in eine Datenbank zurückgeschrieben werden und nicht-flüchtig gemacht werden ohne Sicherung des Kopienspeichers und ohne die Inhalte des gemeinsam verwendeten Puffers in den Kopienspeicher zu kopieren, wenn bestimmt wurde, daß der gemeinsam verwendete Puffer nicht auf den neuesten Stand gebracht wird.

3. Datenverarbeitungssystem mit einem Datenbank-Managementsystem (11), um auf eine Datenbank zuzugreifen und diese zu managen, mit wenigstens einem Puffer (17), der durch Transaktionen gemeinsam verwendet wird, einem log-Puffer (16) zum zeitweiligen Speichern von Pre-und Post-Update-logs, einer log-Datei (19) zum Speichern der Pre- und Post-Updatelogs, und der Datenbank (20) zum Speichern der Daten, wobei das Datenverarbeitungssystem folgendes aufweist:
einen Kopienspeicher (18), um die Inhalte des gemeinsam verwendeten Puffers (17) zeitweilig zu speichern; und
einen Ersetzungs-Controller (12), um die Inhalte des gemeinsam verwendeten Puffers in den Kopienspeicher zu kopieren, eine Prozeß-Wählvorrichtung (13) um zu bestimmten, ob der gemeinsam verwendete Puffer auf den neuesten Stand gebracht wird oder nicht, einen Exklusiv-Controller (14), um den gemeinsam verwendeten Puffer exklusiv zu steuern, und einen log-Controller (15) zum Sichern der Pre-und Post-Updatelogs,
wobei der gemeinsam verwendete Puffer verriegelt wird bevor die Inhalte desselben in den Kopienspeicher kopiert werden und nach der Vervollständigung des Kopiervorganges und vor der Nichtflüchtigmachung der Inhalte des Kopienspeichers entriegelt wird, um eine Verriegelungsperiode des gemeinsam verwendeten Puffers zu verkürzen.

4. Datenverarbeitungssystem nach Anspruch 3, bei dem die Prozeß-Wählvorrichtung (13) dann, wenn bestimmt wurde, daß der gemeinsam verwendet Puffer nicht auf den neuesten Stand gebracht wird, die Inhalte des gemeinsam verwendeten Puffers in die Datenbank schreibt und diese nicht-flüchtig macht und zwar ohne eine Sicherung des Kopienspeichers und ohne die Inhalte des gemeinsam verwendeten Puffers in den Kopienspeicher zu kopieren.

## Revendications

1. Procédé pour raccourcir une période de verrouillage d'une mémoire tampon partagée dans un système de traitement de données, les étapes comprenant :
une étape (3) consistant à protéger une mémoire de copie (18) utilisée lorsque les contenus de la mémoire tampon partagée (17) sont rendus non volatils ;
une étape (4) consistant à verrouiller temporairement la mémoire tampon partagée ;
une étape (5) consistant à copier les contenus de la mémoire tampon partagée dans la mémoire de copie ;
une étape (6) consistant à déverrouiller la mémoire tampon partagée après l'achèvement de la copie dans la mémoire de copie ;
une étape (7) consistant à copier les données d'enregistrement dans la mémoire tampon d'enregistrements (16) vers le fichier d'enregistrements (19) pour rendre les données d'enregistrement non volatiles avant de mettre à jour la mémoire tampon partagée (17) ; et,
une étape (8) consistant à rendre les contenus de la mémoire de copie non volatils,
la mémoire tampon partagée étant verrouillée avant que ses contenus ne soient copiés dans la mémoire de copie et étant déverrouillée après l'achèvement de la copie et avant l'opération consistant à rendre les contenus de la mémoire de copie non volatils.

2. Procédé selon la revendication 1, comprenant, de plus, une étape consistant à déterminer si, oui ou non, la mémoire tampon partagée à rendre non volatile sera mise à jour,
les contenus de la mémoire tampon partagée étant réécrits dans une base de données et étant rendus non volatils sans protéger la mémoire de copie et sans copier les contenus de la mémoire tampon partagée dans la mémoire de copie, lorsqu'il est déterminé que la mémoire tampon partagée ne va pas être mise à jour.

3. Système de traitement de données comportant un système de gestion de base de données (11) pour accéder à une base de données et pour la gérer, au moins une mémoire tampon (17) partagée par des transactions, une mémoire tampon d'enregistrements (16) pour mémoriser temporairement des enregistrements de mises à jour préalable et ultérieure, un fichier d'enregistrements (19) pour mémoriser les enregistrements de mises à jour préalable et ultérieure et la base de données (20) pour mémoriser des données, le système de traitement de données comprenant :
une mémoire de copie (18) pour mémoriser temporairement les contenus de la mémoire tampon partagée (17) ; et
un contrôleur de remplacement (12) pour copier les contenus de la mémoire tampon partagée dans la mémoire de copie, un sélecteur de traitement (13) pour déterminer si, oui ou non, la mémoire tampon partagée sera mise à jour, un contrôleur exclusif (14) pour contrôler de manière exclusive la mémoire tampon partagée et un contrôleur d'enregistrements (15) pour sauvegarder les enregistrements de mises à jour préalable et ultérieure,
la mémoire tampon partagée étant verrouillée avant que ses contenus ne soient copiés dans la mémoire de copie et étant déverrouillée après l'achèvement de la copie et avant l'opération consistant à rendre les contenus de la mémoire de copie non volatils, de manière à raccourcir une période de verrouillage de la mémoire tampon partagée.

4. Système de traitement de données selon la revendication 3, dans lequel le sélecteur de traitement (13), lorsqu'il détermine que la mémoire tampon partagée ne va pas être mise à jour, écrit les contenus de la mémoire tampon partagée dans la base de données et les rend non volatils sans protéger la mémoire de copie et sans copier les contenus de la mémoire tampon partagée dans la mémoire de copie.
